# EUROPEAN PATENT APPLICATION

(11) **EP 3 419 002 A1**
(43) Date of publication of application: **26.12.2018**
(21) Application number: 18171812.3
(22) Date of filing: 11.05.2018
(51) Int. Cl.: G08G 1/16, G08G 1/0962

(54) **INFORMATION PROCESSING DEVICE AND RECORDING MEDIUM**

(30) Priority: 19.06.2017 JP 2017119904; 08.02.2018 JP 2018021147
(71) Applicant: Panasonic Intellectual Property Corporation of America, Torrance, CA 90503 (US)
(72) Inventor: HAGAWA, Reiko, Osaka, 540-6207 (JP); ISHII, Yasunori, Osaka, 540-6207 (JP)
(74) Representative: Eisenführ Speiser

(57) **Abstract**

Provided is an information processing device that can predict a hazard caused by a peripheral mobile body more precisely. The information processing device acquires sensing information obtained by performing sensing in the periphery of a first mobile body, detects, using the sensing information, a body that is in the periphery of the first mobile body and is in a specific state, detects, using the sensing information, a second mobile body that is in the periphery of the first mobile body and the course of which is affected by the detected body, estimates a behavior of the detected second mobile body, based on a specific state, generates at least one item of output information from among information used for movement control of the first mobile body and information provided to mobile bodies in the periphery of the first mobile body, based on the estimated behavior, and outputs the output information.

## Description

### BACKGROUND

### 1. Technical Field

The present disclosure relates to an information processing device, which is mounted on a mobile body such as a vehicle, and a recording medium.

### 2. Description of the Related Art

A device that estimates a predicted course of a first vehicle on the basis of the positional relationship between the first vehicle, which is traveling in front of the host vehicle, and a second vehicle that is traveling in front of the first vehicle has been disclosed in the past (International Publication No. 2008/056806). For example, in a case where the positional relationship between the first vehicle and the second vehicle is close, when there is space to the left and right of the second vehicle, it can be estimated that the predicted course of the first vehicle will be a course in which the first vehicle travels to the right side or the left side of the second vehicle.

### SUMMARY

However, in the aforementioned International Publication No. 2008/056806, it is difficult to implement a more precise estimation such as whether the first vehicle will move to the right side or the left side of the second vehicle, for example. Consequently, in a case where a hazard for the host vehicle is predicted based on the behavior of the first vehicle, it is difficult for the hazard to be predicted precisely.

Thus, the present disclosure has been devised in order to solve the aforementioned problem, and one non-limiting and exemplary embodiment provides an information processing device and a recording medium with which a hazard caused by a peripheral mobile body can be predicted more precisely.

In one general aspect, the techniques disclosed here feature an information processing device mounted on a first mobile body, including: a processor; and a memory storing thereon a computer program, which when executed by the processor, causes the processor to perform operations including: acquiring sensing information obtained by performing sensing in a periphery of the first mobile body; detecting, using the sensing information, a body that is present in the periphery of the first mobile body and is in a specific state; detecting, using the sensing information, a second mobile body that is present in the periphery of the first mobile body and the course of which is affected by the detected body; estimating a behavior of the detected second mobile body, based on the specific state; generating at least one item of output information from among information that is used for movement control of the first mobile body, and information that is provided to a mobile body present in the periphery of the first mobile body, based on the estimated behavior; and outputting the at least one item of output information.

According to the information processing device and the recording medium of the present disclosure, a hazard caused by a peripheral mobile body can be predicted more precisely.

It should be noted that general or specific aspects hereof may be realized by a system, a device, a method, a recording medium, or a computer program, and may be realized by an arbitrary combination of a system, a device, a method, a recording medium, and a computer program.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram depicting an example of the configuration of an information processing device in an embodiment;
Fig. 2 is a drawing depicting an example of a travel scene viewed from within a first mobile body;
Fig. 3 is a drawing depicting another example of a travel scene viewed from within the first mobile body;
Fig. 4 is a flowchart depicting an example of an operation of the information processing device in an embodiment;
Fig. 5 is a flowchart depicting an example of an operation of a behavior estimation unit in an embodiment;
Fig. 6 is a flowchart for describing information that is output from an output unit in an embodiment;
Figs. 7A to 7D are drawings depicting examples of specific states of a body and the behaviors of a second mobile body affected by the body;
Figs. 8A and 8B are a drawing and a flowchart depicting an example of an operation of the information processing device when the second mobile body and the body are present in the same vehicle lane;
Figs. 9A and 9B are a drawing and a flowchart depicting another example of an operation of the information processing device when the second mobile body and the body are present in the same vehicle lane;
Figs. 10A and 10B are a drawing and a flowchart depicting an example of an operation of the information processing device when the second mobile body and the body are present in adjacent vehicle lanes;
Figs. 11A and 11B are a drawing and a flowchart depicting an example of an operation of the information processing device when the second mobile body and the body are present in opposite vehicle lanes; and
Figs. 12A and 12B are a drawing and a flowchart depicting an example of an operation of the information processing device when the second mobile body and the body are present in intersecting vehicle lanes.

### DETAILED DESCRIPTION

An information processing device of the present disclosure is an information processing device mounted on a first mobile body, including: a processor; and a memory storing thereon a computer program, which when executed by the processor, causes the processor to perform operations including: acquiring sensing information obtained by performing sensing in a periphery of the first mobile body; detecting, using the sensing information, a body that is present in the periphery of the first mobile body and is in a specific state; detecting, using the sensing information, a second mobile body that is present in the periphery of the first mobile body and the course of which is affected by the detected body; estimating a behavior of the detected second mobile body, based on the specific state; generating at least one item of output information from among information that is used for movement control of the first mobile body, and information that is provided to a mobile body present in the periphery of the first mobile body, based on the estimated behavior; and outputting the at least one item of output information.

There are cases where the course of the second mobile body that is present in the periphery of the first mobile body is affected due to the body that is present in the periphery of the first mobile body being in a specific state, for example. For instance, in a case where the body and the second mobile body are vehicles, when the second mobile body is traveling behind the body, the course of the second mobile body is affected by the body entering a specific state of decelerating, stopping, or the like. At such time, in a case where the first mobile body is traveling behind the second mobile body, there is a risk of the first mobile body entering a hazardous situation due to the behavior of the second mobile body changing based on the specific state of the body. Thus, by estimating the behavior of the second mobile body on the basis of the specific state of the body, specifically what kind of behavior will be adopted by the second mobile body is known, and therefore a hazard caused by a peripheral mobile body (the second mobile body) can be predicted more precisely. As a result, the first mobile body is able to implement control in order to avoid the hazard caused by the behavior of the second mobile body, and is able to notify the behavior of the second mobile body to other mobile bodies that are present in the periphery of the first mobile body.

Furthermore, the body may include a vehicle, and the specific state may include a state in which an intention is displayed by a lamp mounted on the vehicle being turned on, or a cutting in, meandering, or wandering state as a traveling state. Furthermore, the body may include a person or an animal, and the specific state may include a state in which the person or the animal is present in a roadway. Furthermore, the body may include a traffic signal, and the specific state may include a state in which the traffic signal instructs stopping or turning right or left.

As the specific state, these states are states in which the behavior of the second mobile body may change. These states can be easily detected by means of photographing carried out by a camera or the like, and it therefore becomes easy to estimate the behavior of the second mobile body. It should be noted that a state in which an intention is displayed using a lamp means a state in which a right or left turn, a vehicle lane change, deceleration, or stopping is being attempted by means of a direction indicator, a brake lamp, or a hazard lamp of a vehicle.

Furthermore, the second mobile body may travel on a travel path that is the same as, adjacent to, or intersecting a road on which the body is present.

Accordingly, the second mobile body, the behavior of which is to be estimated, is a mobile body that travels on a travel path that is the same as, adjacent to, or intersecting the road on which the body is present. For example, in a case where the second mobile body is traveling on a travel path that is the same as the road on which the body is present, it is possible to estimate the behavior of the second mobile body when the body is in a specific state of decelerating, stopping, or the like. Furthermore, for example, in a case where the second mobile body is traveling on a travel path that adjacent to the road on which the body is present, it is possible to estimate the behavior of the second mobile body when the body is in a specific state such as turning right or left or making a vehicle lane change. Furthermore, for example, in a case where the second mobile body is traveling on a travel path that intersects the road on which the body is present, it is possible to estimate the behavior of the second mobile body when the body is in a specific state such as turning right or left.

Furthermore, the behavior may be estimated additionally based on a state of the second mobile body.

Even in a case where the body has entered the specific state, the estimation result for the behavior of the second mobile body may change depending on the state of the second mobile body. Consequently, the behavior of the second mobile body can be estimated more precisely by estimating the behavior on the basis of also the state of the second mobile body in addition to the specific state of the body.

Furthermore, the behavior may be estimated additionally based on a relationship between the body and the second mobile body.

Even in a case where the body has entered the specific state, the estimation result for the behavior of the second mobile body may change depending on a relationship between the body and the second mobile body. Consequently, the behavior of the second mobile body can be estimated more precisely by estimating the behavior on the basis of also a relationship between the body and the second mobile body in addition to the specific state of the body.

Furthermore, the output information may be generated additionally based on a relationship between the first mobile body and the second mobile body.

The type of movement control implemented by the first mobile body using the estimation result for the behavior of the second mobile body may change depending on a relationship between the first mobile body and the second mobile body. Consequently, more precise control information can be generated based on also a relationship between the first mobile body and the second mobile body.

Furthermore, the relationship may include a positional relationship.

Accordingly, the behavior of the second mobile body can be estimated more precisely based on the positional relationship between the body and the second mobile body. Furthermore, more precise control information can be generated based on the positional relationship between the first mobile body and the second mobile body.

Furthermore, the relationship may include a relationship regarding at least one of speed and direction.

Accordingly, the behavior of the second mobile body can be estimated more precisely based on a relationship regarding at least one of speed and direction between the body and the second mobile body. Furthermore, more precise control information can be generated based on a relationship regarding at least one of speed and direction between the first mobile body and the second mobile body.

Furthermore, the behavior may be estimated additionally based on a road situation in a periphery of the body.

Even in a case where the body has entered the specific state, the estimation result for the behavior of the second mobile body may change depending on the road situation in the periphery of the body. Consequently, the behavior of the second mobile body can be estimated more precisely by estimating the behavior on the basis of also the road situation in the periphery of the body in addition to the specific state of the body.

Furthermore, the behavior may be estimated additionally based on a road situation in a periphery of the second mobile body.

Even in a case where the body has entered the specific state, the estimation result for the behavior of the second mobile body may change depending on the road situation in the periphery of the second mobile body. Consequently, the behavior of the second mobile body can be estimated more precisely by estimating the behavior on the basis of also the road situation in the periphery of the second mobile body in addition to the specific state of the body.

In the estimating, in a case where the second mobile body is present in plurality, behaviors of the plurality of second mobile bodies may be estimated so as to be coordinated, and, in the generating, the at least one item of output information may be generated based on the behaviors of the plurality of second mobile bodies.

Accordingly, it is possible to suppress the estimated behaviors interfering with each other. Consequently, the first mobile body can be operated more appropriately, and it becomes possible to improve safety.

The information that is used for the movement control of the first mobile body may include control information for controlling at least one of acceleration, deceleration, and steering of the first mobile body.

Accordingly, the acceleration, deceleration, and steering of the first mobile body can be operated more appropriately.

The information that is used for the movement control of the first mobile body may include input information for processing in which a route plan for the first mobile body is decided based on a body that is present within a predetermined range from the first mobile body.

Accordingly, it becomes easy to control, in real time, the movement control for the first mobile body in accordance with the behavior of the second mobile body. Furthermore, if there are a plurality of second mobile bodies, coordination between each of the behaviors of the plurality of second mobile bodies can be ensured more easily.

A recording medium of the present disclosure is a non-transitory recording medium storing thereon a computer program for controlling an information processing apparatus that is mounted on a first mobile body, which when executed by a processor, causes the processor to perform operations including: acquiring sensing information obtained by performing sensing in a periphery of the first mobile body; detecting, using the sensing information, a body that is present in the periphery of the first mobile body and is in a specific state; detecting, using the sensing information, a second mobile body that is present in the periphery of the first mobile body and the course of which is affected by the detected body; estimating a behavior of the detected second mobile body, based on the specific state; generating at least one item of output information from among information that is used for movement control of the first mobile body, and information that is provided to a mobile body present in the periphery of the first mobile body, based on the estimated behavior; and outputting the at least one item of output information.

Accordingly, it is possible to provide a recording medium storing thereon a computer program that can predict a hazard caused by a peripheral mobile body more precisely.

Hereinafter, embodiments will be described in a specific manner with reference to the drawings.

It should be noted that the embodiments described hereinafter all represent general or specific examples. The numerical values, the shapes, the constituent elements, the arrangement positions and modes of connection of the constituent elements, the steps, the order of the steps and the like given in the following embodiments are examples and are not intended to restrict the present disclosure. Furthermore, from among the constituent elements in the following embodiments, constituent elements that are not mentioned in the independent claims indicating the most significant concepts are described as optional constituent elements.

### (Embodiments)

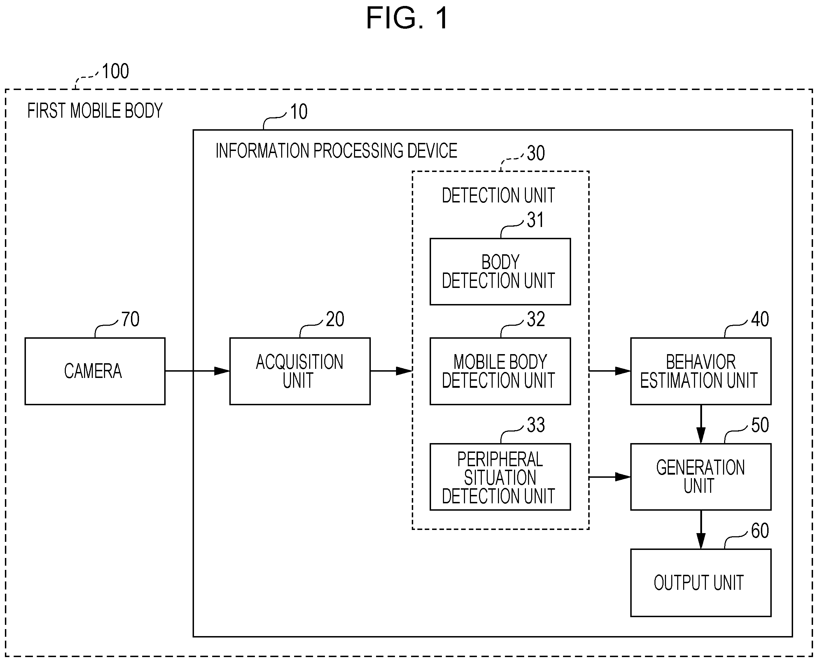

Hereinafter, an embodiment will be described using Figs. 1 to 12.

### [1. Configuration of Information Processing Device]

Fig. 1 is a block diagram depicting an example of the configuration of an information processing device 10 in the embodiment. It should be noted that Fig. 1 also depicts a first mobile body 100 on which the information processing device 10 is mounted, and a camera 70 that is mounted on the first mobile body 100.

The camera 70 is a camera that captures the periphery of the first mobile body 100, and is able to capture the front, the sides, and the rear of the first mobile body 100, for example. It should be noted that the camera 70 may be a camera such as a drive recorder. Furthermore, the first mobile body 100 may be additionally provided with radar, LIDAR, or the like.

The information processing device 10 is mounted on the first mobile body 100, and is configured of one electronic control unit (ECU) or a plurality of ECUs connected by an in-vehicle network, for example. The information processing device 10 estimates the behavior of a peripheral mobile body on the basis of a sensing result obtained from the camera 70 or the like. The information processing device 10 outputs information for controlling the engine, brakes, steering, and the like of the first mobile body, or control information that includes information to be presented to an occupant of the first mobile body, generated based on an estimate result, and outputs the estimate result to other mobile bodies. The information processing device 10 thereby suppresses the first mobile body 100 or a peripheral mobile body entering a hazardous state. The information processing device 10 is provided with an acquisition unit 20, a detection unit 30, a behavior estimation unit 40, a generation unit 50, and an output unit 60.

The acquisition unit 20 acquires sensing information obtained by performing sensing in the periphery of the first mobile body 100. For example, the acquisition unit 20 acquires an image obtained by the camera 70 capturing the periphery of the first mobile body 100, as the sensing information. Furthermore, for example, the acquisition unit 20 acquires radar information obtained by scanning the periphery of the first mobile body 100 by means of radar or LIDAR, as the sensing information. The information acquired by the acquisition unit 20 is sent to the detection unit 30, analyzed, and used for a determination that is based on machine learning.

The detection unit 30 carries out analysis or the like of the sensing information acquired by the acquisition unit 20. The detection unit 30 detects the position, speed, direction, state, and so forth of vehicles, people, animals, traffic signals, or the like that are present in the periphery of the first mobile body 100 by analyzing images, radar information, and so forth. The detection unit 30 is provided with a body detection unit 31, a mobile body detection unit 32, and a peripheral situation detection unit 33, for example, as constituent elements. It should be noted that the detection carried out by the body detection unit 31, the mobile body detection unit 32, and the peripheral situation detection unit 33 is not restricted to the logical or statistical analysis of images and radar information or the like, and may be detection using machine learning such as deep learning, for example. Furthermore, this detection may be detection using information obtained via inter-vehicle communication or communication with an infrastructure, for example.

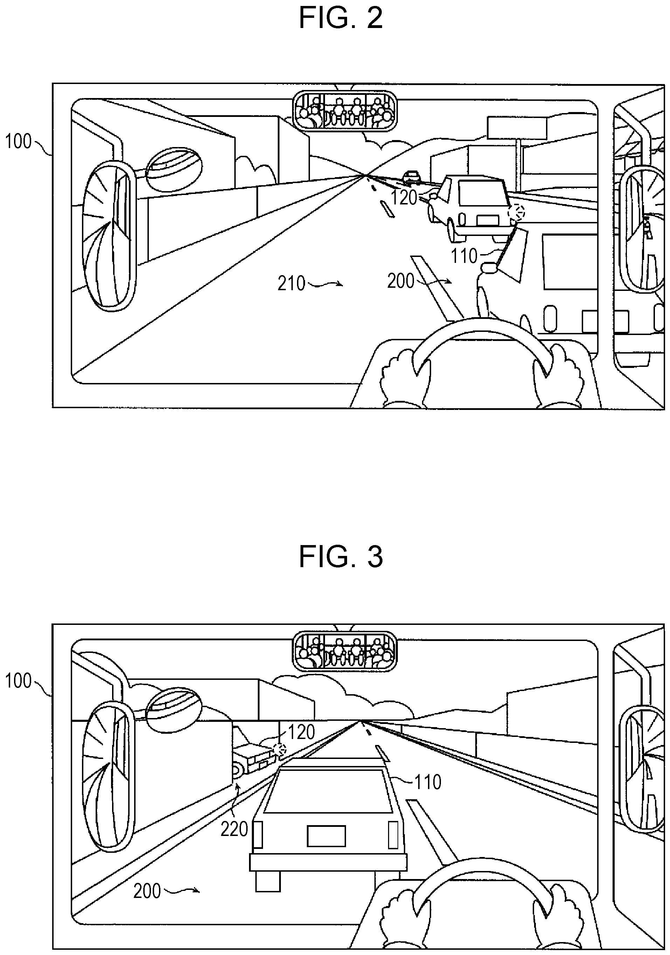

The body detection unit 31 detects, using the sensing information, a body that is present in the periphery of the first mobile body 100 and is in a specific state. Furthermore, the body detection unit 31 detects the position, speed, direction, or the like of a body that is in the specific state. Here, a body that is in the specific state will be described using Figs. 2 and 3.

Fig. 2 is a drawing depicting an example of a travel scene viewed from within the first mobile body 100. Fig. 3 is a drawing depicting another example of a travel scene viewed from within the first mobile body 100. Figs. 2 and 3 depict states in which a second mobile body 110 is present in front of the first mobile body 100, and a body 120 is present in front of the second mobile body 110, as the periphery of the first mobile body 100. In the present embodiment, it is assumed that the first mobile body 100, the second mobile body 110, and the body 120 are vehicles. Fig. 2 depicts a situation in which the right-side lamp (direction indicator) of the body 120 is turned on and the body 120 is attempting to make a right turn. Fig. 3 depicts a situation in which the left-side lamp (direction indicator) of the body 120 is turned on and the body 120 is attempting to enter an intersection. In this way, the specific state includes a state in which an intention is displayed by a lamp (direction indicator, brake lamp, hazard lamp, or the like) mounted on the body (vehicle) 120 being turned on, in other words, includes a state in which deceleration, stopping, a right or left turn, a vehicle lane change, or the like is being attempted. The body detection unit 31 recognizes the lit state of the lamp by means of, for example, the logical or statistical analysis of images or the like, or machine learning or the like, and detects the body 120 that is in the specific state.

It should be noted that the specific state is not restricted to a state in which an intention is displayed by a lamp being turned on. For example, the specific state may include an unstable traveling state such as cutting in, meandering, or wandering. These traveling states are detected by means of the logical or statistical analysis of images and radar information or the like, or machine learning or the like. Furthermore, the specific state may include a failure state that can be confirmed from outside such as a tire puncture, or a failure state that is difficult to confirm from outside such as a failure in a motor provided in a power steering system.

The mobile body detection unit 32 detects, using the sensing information, the second mobile body 110 that is present in the periphery of the first mobile body 100 and the course of which is affected by the body 120 detected by the body detection unit 31. It should be noted that the course of the second mobile body 110 being affected by the body 120 means that, in a case where the second mobile body 110 maintains the present traveling state, the body 120 and the second mobile body 110 may collide due to the body 120 entering the specific state. For example, in the case of the situation depicted in Fig. 2, the second mobile body 110 the course of which is affected by the body 120 is a mobile body that is traveling on the same travel path 200 as the road (travel path 200) on which the body 120 is present. Furthermore, for example, in the case of the situation depicted in Fig. 3, the second mobile body 110 the course of which is affected by the body 120 is a mobile body that is traveling on the travel path 200, which intersects the road (travel path 220) on which the body 120 is present. Furthermore, for example, in the situation depicted in Fig. 2, in a case where the body 120 is traveling on a travel path 210 rather than the travel path 200, the second mobile body 110 the course of which is affected by the body 120 is a mobile body that is traveling on the travel path 200, which is adjacent to the road (travel path 210) on which the body 120 is present. It should be noted that the detection of the travel path on which the body 120 is present and the travel path on which the second mobile body 110 is traveling is carried out using a white line detection technique, for example.

The peripheral situation detection unit 33 detects, using the sensing information, the situation in the periphery of the first mobile body 100. For example, the peripheral situation detection unit 33 detects, using the sensing information, a congestion situation on the road being used, the road situation in the periphery of the body 120, the periphery of the second mobile body 110, and the periphery of the first mobile body 100, or the like. Specifically, the peripheral situation detection unit 33 detects whether or not there is space to the left and right of the body 120, whether or not there is space to the left and right of the second mobile body 110, whether or not there is space in front of the first mobile body, and so forth.

The behavior estimation unit 40 estimates the behavior of the second mobile body 110 detected by the mobile body detection unit 32, based on the specific state of the body 120. It should be noted that the behavior estimation unit 40 may estimate the behavior of the second mobile body 110 additionally based on the state of the second mobile body 110, may estimate the behavior additionally based on a relationship between the body 120 and the second mobile body 110, may estimate the behavior additionally based on the road situation in the periphery of the body 120, and may estimate the behavior additionally based on the road situation in the periphery of the second mobile body 110.

The generation unit 50 generates at least one item of output information from among information that is used for movement control of the first mobile body 100 and information that is provided to mobile bodies present in the periphery of the first mobile body 100, based on the behavior of the second mobile body 110 estimated by the behavior estimation unit 40. The information that is used for movement control of the first mobile body 100 includes control information for controlling at least one of the acceleration, deceleration, and steering of the first mobile body 100, for example. For instance, the control information is information relating to controlling the behavior or the like of a vehicle such as "drive", "turn", and "stop" (in other words, acceleration, steering, and deceleration). Furthermore, for example, the provided information is information for suppressing a mobile body that is present in the periphery of the first mobile body 100 entering a hazardous state due to the behavior of the second mobile body 110. It should be noted that the generation unit 50 generates the control information also on the basis of a relationship between the first mobile body 100 and the second mobile body 110 (positional relationship, speed, direction, or the like).

The output unit 60 outputs the at least one item of output information generated by the generation unit 50. For example, in a case where the first mobile body 100 is an automatic driving vehicle, the output unit 60 is an ECU of a chassis system relating to controlling a behavior or the like of the vehicle such as "turning" or "stopping", is connected to the steering, engine, brakes, and so forth, and outputs control information thereto. Furthermore, for example, in a case where the first mobile body 100 is a manual driving vehicle, the output unit 60 outputs image (character) information, audio information, or both thereof as control information that instructs a behavior or the like of the vehicle such as "turning" or "stopping", to a display, speaker, or the like mounted on the first mobile body 100. It should be noted that even in a case where the first mobile body 100 is an automatic driving vehicle, the output unit 60 may output image (character) information, audio information, or both thereof as control information to a display, speaker, or the like mounted on the first mobile body 100, in order to notify the occupant of the first mobile body 100. Furthermore, even in a case where the first mobile body 100 is a manual driving vehicle, the output unit 60 may output control information to the steering, engine, brakes, and so forth in order to assist with manual driving. Furthermore, for example, the output unit 60 outputs information relating to the behavior of the second mobile body 110 to other mobile bodies by way of a communication unit provided in the first mobile body 100.

An ECU is a device including, for example, a processor (microprocessor), a digital circuit such as a memory, an analog circuit, a communication circuit, or the like. A memory is a ROM, a RAM, or the like, and can store a control program (computer program) that is executed by the processor. For example, the information processing device 10 realizes various types of functions (the acquisition unit 20, the detection unit 30, the behavior estimation unit 40, the generation unit 50, and the output unit 60) by a processor operating according to the control program (computer program).

### [2. Operation of Information Processing Device]

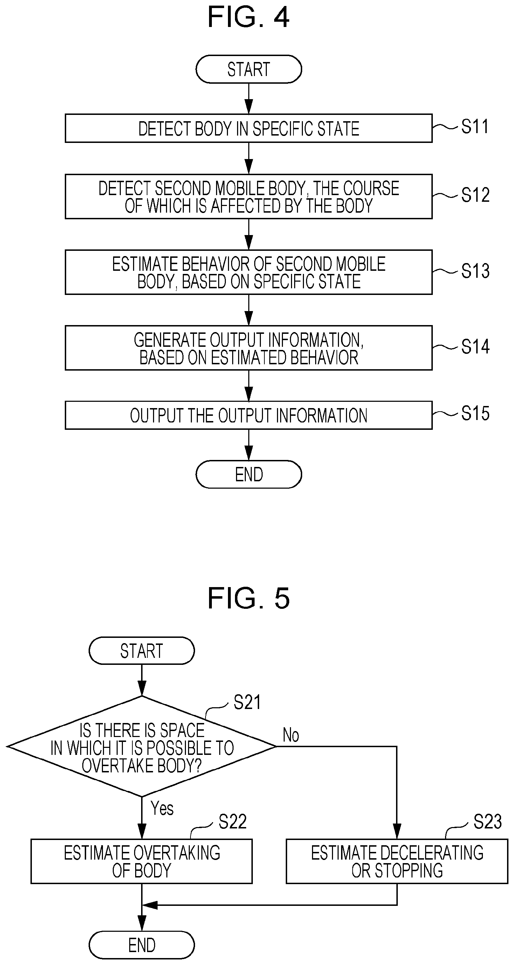

Next, an operation of the information processing device 10 will be described using Figs. 4 to 12.

Fig. 4 is a flowchart depicting an example of an operation of the information processing device 10 in the embodiment. Fig. 4 depicts an example of a basic operation of the information processing device 10. First, the body detection unit 31 detects the body 120 that is in the specific state (step S11), the mobile body detection unit 32 detects the second mobile body 110 the course of which is affected by the body 120 (step S12), the behavior estimation unit 40 estimates the behavior of the second mobile body 110 on the basis of the specific state of the body 120 (step S13), the generation unit 50 generates output information (step S14), and the output unit 60 then outputs the output information (step S15).

In step S13, the behavior estimation unit 40 estimates the behavior of the second mobile body 110 additionally based on also the road situation in the periphery of the body 120, in addition to the specific state of the body 120. This is described using Fig. 5.

Fig. 5 is a flowchart depicting an example of an operation of the behavior estimation unit 40 in the embodiment. It should be noted that Fig. 5 depicts an operation of the behavior estimation unit 40 for when the body 120 has entered the specific state in a case where the body 120 and the second mobile body 110 are present in the same vehicle lane.

The behavior estimation unit 40 determines whether or not there is space in which it is possible for the second mobile body 110 to overtake the body 120 that is in the specific state (step S21). The behavior estimation unit 40 carries out this determination on the basis of the road situation in the periphery of the body 120 detected by the peripheral situation detection unit 33, for example.

The behavior estimation unit 40 estimates that the second mobile body 110 will overtake the body 120 (step S22) in a case where it is determined that there is space in which it is possible for the second mobile body 110 to overtake the body 120 ("yes" in step S21).

However, the behavior estimation unit 40 estimates that the second mobile body 110 will decelerate or stop (step S23) in a case where it is determined that there is no space in which it is possible for the second mobile body 110 to overtake the body 120 ("no" in step S21).

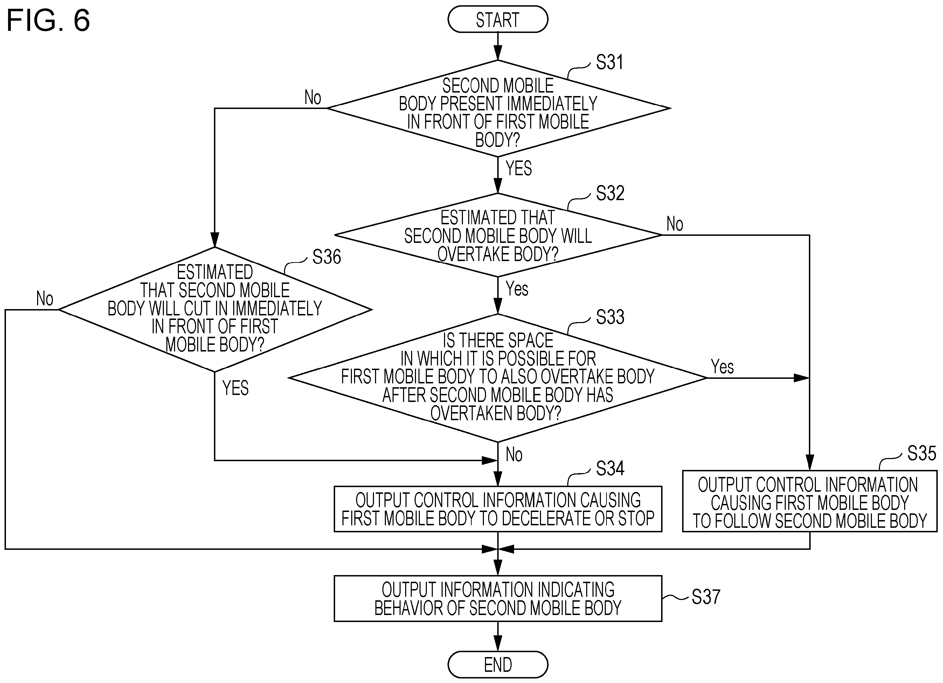

Further, in a case where the output unit 60 outputs control information in step S15, the output unit 60 outputs control information generated by the generation unit 50, additionally based on a relationship between the first mobile body 100 and the second mobile body 110, in addition to the behavior of the second mobile body 110. This is described using Fig. 6.

Fig. 6 is a flowchart for describing information that is output from the output unit 60 in the embodiment. It should be noted that, in Fig. 6, it is assumed that the body 120 and the second mobile body 110 are present in the same vehicle lane, and Fig. 6 depicts an operation of the information processing device 10 that is carried out after the estimation of the behavior of the second mobile body 110 in Fig. 5.

First, the generation unit 50 determines whether or not the second mobile body 110 is present immediately in front of the first mobile body 100 (step S31). The generation unit 50 carries out this determination on the basis of the position of the second mobile body 110 detected by the mobile body detection unit 32, for example.

The generation unit 50 determines whether or not the behavior estimation unit 40 has estimated that the second mobile body 110 will overtake the body 120 (step S32) in a case where it is determined that the second mobile body 110 is present immediately in front of the first mobile body 100 ("yes" in step S31).

The generation unit 50 determines whether or not there is space in which it is possible for the first mobile body 100 to also overtake the body 120 after the second mobile body 110 has overtaken the body 120 (step S33) in a case where the behavior estimation unit 40 has estimated that the second mobile body 110 will overtake the body 120 ("yes" in step S32). The generation unit 50 carries out this determination by estimating the road situation in the periphery of the body 120 after (several seconds after, for example) the second mobile body 110 has overtaken the body 120, on the basis of the present road situation in the periphery of the body 120 detected by the peripheral situation detection unit 33, for example.

In a case where it is determined that there is no space in which it is possible for the first mobile body 100 to also overtake the body 120 after the second mobile body 110 has overtaken the body 120 ("no" in step S33), since the first mobile body 100 is not able to overtake the body 120, the generation unit 50 generates control information that causes the first mobile body 100 to decelerate or stop. The output unit 60 then outputs the generated control information (step S34).

However, in a case where the behavior estimation unit 40 has estimated that the second mobile body 110 will not overtake the body 120 (that is, has estimated that the second mobile body 110 will decelerate or stop) ("no" in step S32), since the second mobile body 110 will decelerate or stop, the generation unit 50 generates control information that causes the first mobile body 100 to follow the second mobile body 110. In the case of "no" in step S32, the generation unit 50 generates control information that causes the first mobile body 100 to decelerate or stop in accordance with the second mobile body 110. The output unit 60 then outputs the generated control information (step S35).

Furthermore, in a case where it is determined that there is space in which it is possible for the first mobile body 100 to also overtake the body 120 after the second mobile body 110 has overtaken the body 120 ("yes" in step S33), since the first mobile body 100 is able to overtake the body 120, the generation unit 50 generates control information that causes the first mobile body 100 to follow the second mobile body 110. In the case of "yes" in step S33, the generation unit 50 generates control information that causes the first mobile body 100 to overtake the body 120 following the second mobile body 110. The output unit 60 then outputs the generated control information (step S35).

Furthermore, the generation unit 50 determines whether or not the behavior estimation unit 40 has estimated that the second mobile body 110 will cut in immediately in front of the first mobile body 100 (step S36) in a case where it is determined that the second mobile body 110 is not present immediately in front of the first mobile body 100 ("no" in step S31). For example, the behavior estimation unit 40 estimates that the second mobile body 110 will cut in immediately in front of the first mobile body 100 in a case where it is estimated that the second mobile body 110 will overtake by entering the travel path of the first mobile body 100 when overtaking the body 120. Furthermore, for example, the behavior estimation unit 40 estimates that the second mobile body 110 will not cut in immediately in front of the first mobile body 100 in a case where it is estimated that the second mobile body 110 will not overtake the body 120 and will decelerate or stop.

In a case where it is determined that the behavior estimation unit 40 has estimated that the second mobile body 110 will cut in immediately in front of the first mobile body 100 ("yes" in step S36), there is a risk of the first mobile body 100 colliding from behind with the second mobile body 110, and therefore the generation unit 50 generates control information that causes the first mobile body 100 to decelerate or stop. The output unit 60 then outputs the generated control information (step S34).

In a case where it is determined that the behavior estimation unit 40 has estimated that the second mobile body 110 will not cut in immediately in front of the first mobile body 100 ("no" in step S36), the generation unit 50 does not generate control information, and the first mobile body 100 maintains the present course.

In this way, the output unit 60 outputs control information that is generated based on also the positional relationship between the first mobile body 100 and the second mobile body 110.

Control information generated based on the behavior of the second mobile body 110 (a behavior indicating whether the body 120 will be overtaken or not overtaken, for example) was output; however, it should be noted that the output unit 60 may output information indicating the behavior of the second mobile body 110 as information that is provided to mobile bodies present in the periphery of the first mobile body 100, for example. For instance, after the processing of any of steps S34 to S36 has been carried out, the output unit 60 outputs information indicating the behavior of the second mobile body 110 to mobile bodies present in the periphery of the first mobile body 100 (step S37). Thus, mobile bodies present in the periphery of the first mobile body 100 are able to know the behavior of the second mobile body 110 and are able to avoid a hazard caused by the second mobile body 110.

An example of an operation of the information processing device 10 in a case where the body 120 and the second mobile body 110 are present in the same vehicle lane has been described using Figs. 5 and 6; however, there are various feasible specific states of the body 120 and behaviors of the second mobile body 110 affected by the body 120.

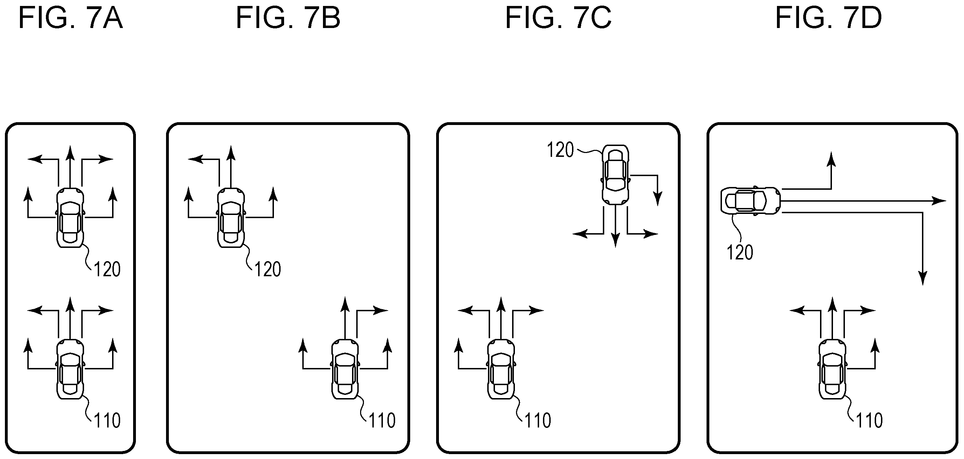

Figs. 7A to 7D are drawings depicting examples of specific states of the body 120 and the behaviors of the 2nd mobile body 110 affected by the body 120. Fig. 7A is a drawing depicting an example in a case where the body 120 and the second mobile body 110 are present in the same vehicle lane. Fig. 7B is a drawing depicting an example in a case where the body 120 and the second mobile body 110 are present in adjacent vehicle lanes. Fig. 7C is a drawing depicting an example in a case where the body 120 and the second mobile body 110 are present in opposite vehicle lanes. Fig. 7D is a drawing depicting an example in a case where the body 120 and the second mobile body 110 are present in intersecting vehicle lanes. It should be noted that, in Figs. 7A to 7D, an arrow that extends in the advancement direction of the body 120 or the second mobile body 110 and then bends left, right, up, or down signifies a right or left turn, and an arrow that extends in a direction that is perpendicular to the advancement direction and then bends toward the advancement direction signifies a vehicle lane change.

For example, with regard to Figs. 7A to 7D, the specific state of the body 120 includes deceleration, stopping, a right or left turn, a vehicle lane change to the left or right, or the like, and the behavior of the second mobile body 110 includes deceleration, stopping, a right or left turn, a vehicle lane change to the left or right, maintaining the present speed, or the like. Furthermore, the output content of the output unit 60 (control content for the first mobile body 100, for example) changes based on the behavior of the second mobile body 110. Hereinafter, five application examples will be given and described with regard to the specific state of the body 120, the behavior of the second mobile body 110 that is estimated according to the specific state or the like, and control content for the first mobile body 100 that is based on the behavior.

### [3-1. Application Example 1]

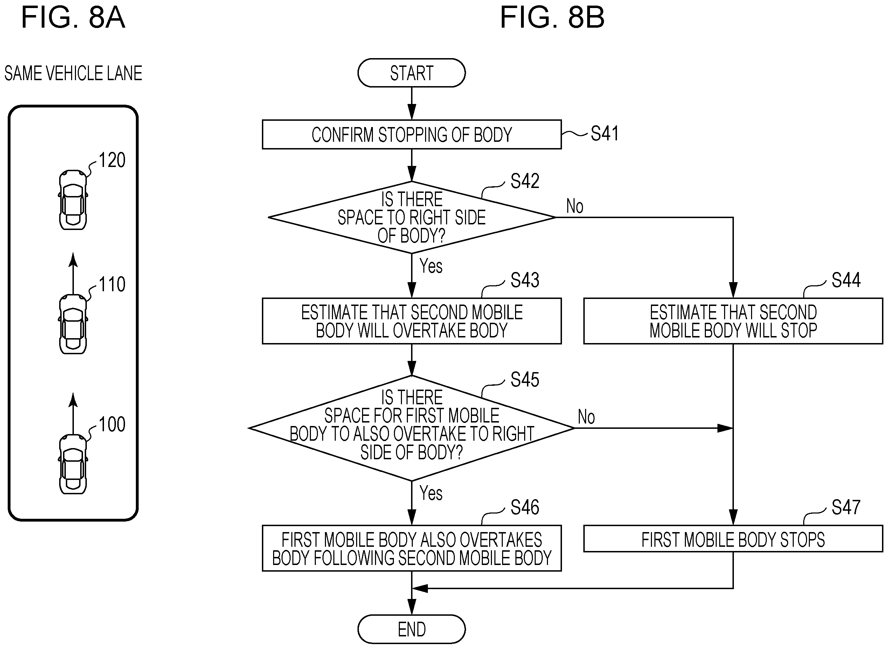

Figs. 8A and 8B are a drawing and a flowchart depicting an example of an operation of the information processing device 10 when the second mobile body 110 and the body 120 are present in the same vehicle lane. It should be noted that, in application example 1, the first mobile body 100 is present in the same vehicle lane as the vehicle lane in which the second mobile body 110 is present.

First, the body detection unit 31 confirms that the body 120 has stopped, as the specific state (step S41). For example, the body detection unit 31 confirms that the body 120 has stopped, by detecting a state such as a hazard lamp of the body 120 being turned on, smoke from a smoke candle, or stop sign equipment being set up.

Next, the behavior estimation unit 40 determines whether or not there is space to the right side of the stopped body 120 (an overtaking lane, for example) (step S42). The behavior estimation unit 40 carries out this determination on the basis of the road situation in the periphery of the body 120 detected by the peripheral situation detection unit 33, for example.

In a case where it is determined that there is space to the right side of the body 120 ("yes" in step S42), the second mobile body 110 is able to overtake the body 120, and therefore the behavior estimation unit 40 estimates that the second mobile body 110 will overtake the body 120 (step S43).

However, in a case where it is determined that there is no space to the right side of the body 120 ("no" in step S42), the second mobile body 110 is not able to overtake the body 120, and therefore the behavior estimation unit 40 estimates that the second mobile body 110 will stop (step S44).

After the behavior estimation unit 40 has estimated that the second mobile body 110 will overtake the body 120 in step S43, the generation unit 50 determines whether or not there is space for the first mobile body 100 to also overtake to the right side of the body 120 (step S45). The generation unit 50 carries out this determination by estimating the road situation in the periphery of the body 120 after (several seconds after, for example) the second mobile body 110 has overtaken the body 120, on the basis of the present road situation in the periphery of the body 120 detected by the peripheral situation detection unit 33, for example.

In a case where it is determined that there is space for the first mobile body 100 to also overtake to the right side of the body 120 ("yes" in step S45), since the first mobile body 100 is able to overtake the body 120, the generation unit 50 generates control information that causes the first mobile body 100 to follow the second mobile body 110. The output unit 60 then outputs the control information, and consequently the first mobile body 100 also overtakes the body 120 following the second mobile body 110 (step S46).

In a case where it is estimated that the second mobile body 110 will stop in step S44, or it is determined that there is no space for the first mobile body 100 to also overtake to the right side of the body 120 ("no" in step S45), the generation unit 50 generates control information that causes the first mobile body 100 to stop. The output unit 60 then outputs the control information, and consequently the first mobile body 100 stops (step S47).

In this way, in application example 1, the second mobile body 110 travels on a travel path that is the same as the road on which the body 120 is present, and the behavior estimation unit 40 estimates the behavior of the second mobile body 110 additionally based on the road situation in the periphery of the body 120 (the space to the right side of the body 120, for example). It should be noted that the control information is generated based on also a relationship between the first mobile body 100 and the second mobile body 110 (the positional relationship, for example). Here, the positional relationship refers to being in a relationship in which the first mobile body 100 and the second mobile body 110 are present in the same vehicle lane. It should be noted that also in application examples 2 to 5 described later on, the control information is generated based on also a relationship between the first mobile body 100 and the second mobile body 110 (the positional relationship, for example).

### [3-2. Application Example 2]

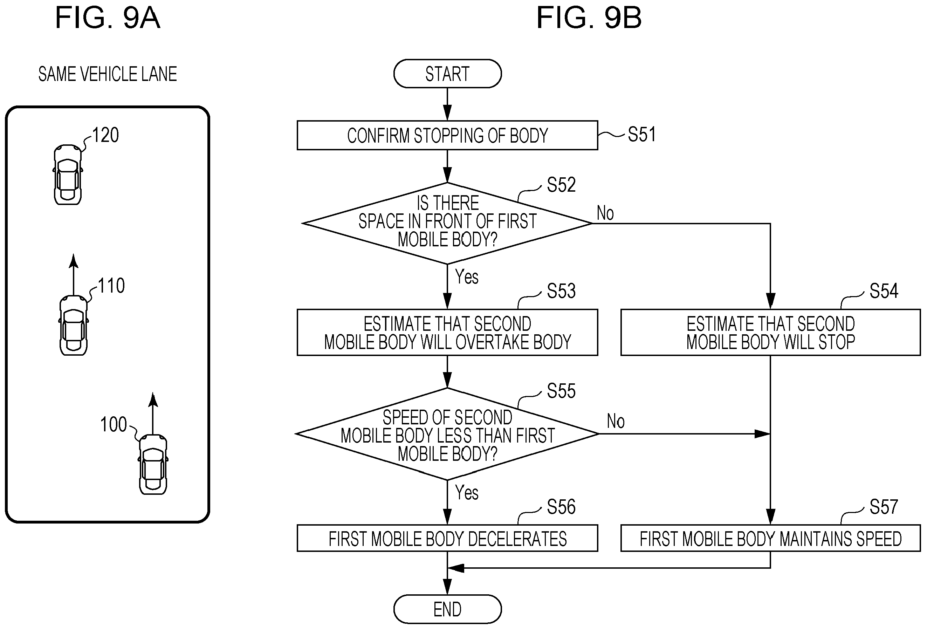

Figs. 9A and 9B are a drawing and a flowchart depicting another example of an operation of the information processing device 10 when the second mobile body 110 and the body 120 are present in the same vehicle lane. It should be noted that, in application example 2, the first mobile body 100 is present in a vehicle lane that is adjacent to the vehicle lane in which the second mobile body 110 is present.

First, the body detection unit 31 confirms that the body 120 has stopped, as the specific state (step S51).

Next, the behavior estimation unit 40 determines whether or not there is space in front of the first mobile body 100 (step S52). That is, the behavior estimation unit 40 determines whether or not there is space to the right side of the stopped body 120 and there is space to the right side of the second mobile body 110. The behavior estimation unit 40 carries out this determination on the basis of the road situation in the periphery of the body 120 and the road situation in the periphery of the second mobile body 110 detected by the peripheral situation detection unit 33, for example.

In a case where it is determined that there is space in front of the first mobile body 100 ("yes" in step S52), the second mobile body 110 is able to overtake the body 120, and therefore the behavior estimation unit 40 estimates that the second mobile body 110 will overtake the body 120 (step S53).

However, in a case where it is determined that there is no space in front of the first mobile body 100 ("no" in step S52), the second mobile body 110 is not able to overtake the body 120, and therefore the behavior estimation unit 40 estimates that the second mobile body 110 will stop (step S54).

In a case where the behavior estimation unit 40 has estimated in step S53 that the second mobile body 110 will overtake the body 120, the generation unit 50 determines whether or not the speed of the second mobile body 110 is less than that of the first mobile body 100 (step S55). The generation unit 50 carries out this determination on the basis of the speed of the second mobile body 110 detected by the mobile body detection unit 32, for example.

In a case where it is determined that the speed of the second mobile body 110 is less than that of the first mobile body 100 ("yes" in step S55), there is a risk of the first mobile body 100 colliding from behind with the second mobile body 110 having entered the same vehicle lane, and therefore the generation unit 50 generates control information that causes the first mobile body 100 to decelerate. The output unit 60 then outputs the control information, and consequently the first mobile body 100 decelerates (step S56). It should be noted that the generation unit 50 may determine whether or not the distance from the first mobile body 100 to the second mobile body 110 is equal to or greater than a predetermined distance. It should be noted that the predetermined distance is a distance of an extent with which the second mobile body 110 can be recognized in an image captured by the camera 70, for example. For example, in a case where the distance from the first mobile body 100 to the second mobile body 110 is equal to or greater than the predetermined distance, the first mobile body 100 and the second mobile body 110 are sufficiently separated, and therefore the first mobile body does not have to decelerate in step S56.

In a case where it is estimated that the second mobile body 110 will stop in step S54, since the second mobile body 110 will not enter the same vehicle lane as that of the first mobile body 100, the first mobile body 100 maintains the speed thereof (step S57). Alternatively, in a case where the generation unit 50 has determined that the speed of the second mobile body 110 is greater than that of the first mobile body 100 ("no" in step S55), there is a low risk of the first mobile body 100 colliding from behind with the second mobile body 110 having entered the same vehicle lane, and therefore the first mobile body 100 maintains the speed thereof (step S57).

In this way, in application example 2, the second mobile body 110 travels on a travel path that is the same as the road on which the body 120 is present, and the behavior estimation unit 40 estimates the behavior of the second mobile body 110 additionally based on the road situation in the periphery of the body 120 (the space to the right side of the body 120, for example) and the road situation in the periphery of the second mobile body 110 (the space to the right side of the second mobile body 110, for example). It should be noted that the control information is generated based on also a relationship between the first mobile body 100 and the second mobile body 110 (a relationship regarding at least one of speed and direction).

### [3-3. Application Example 3]

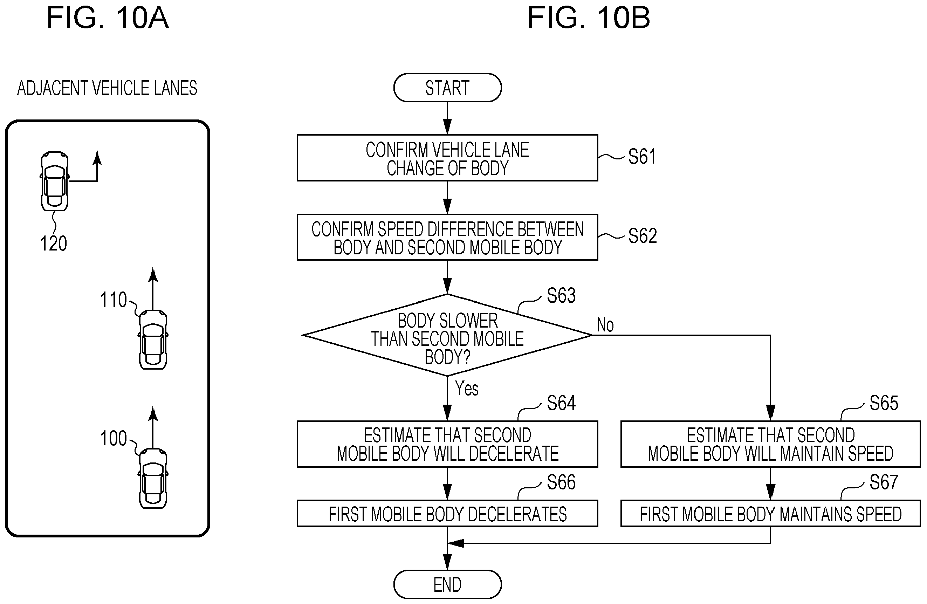

Figs. 10A and 10B are a drawing and a flowchart depicting an example of an operation of the information processing device 10 when the second mobile body 110 and the body 120 are present in adjacent vehicle lanes. It should be noted that, in application example 3, the first mobile body 100 is present in the same vehicle lane as the vehicle lane in which the second mobile body 110 is present.

First, the body detection unit 31 confirms a vehicle lane change of the body 120, as the specific state (step S61). For example, the body detection unit 31 confirms a vehicle lane change of the body 120 by detecting a direction indicator of the body 120 being turned on or the roll and yaw of the vehicle body.

Next, the behavior estimation unit 40 confirms the relationship (also referred to as the speed difference) regarding at least one of speed and direction between the body 120 and the second mobile body 110 (step S62). For example, the behavior estimation unit 40 confirms the speed difference on the basis of the speed of the body 120 detected by the body detection unit 31 and the speed of the second mobile body 110 detected by the mobile body detection unit 32.

Next, the behavior estimation unit 40 determines whether or not the speed of the body 120 is less than that of the second mobile body 110 (step S63).

In a case where it is determined that the speed of the body 120 is less than that of the second mobile body 110 ("yes" in step S63), there is a risk of the second mobile body 110 colliding from behind with the body 120 having entered the same vehicle lane, and therefore the behavior estimation unit 40 estimates that the second mobile body 110 will decelerate (step S64).

However, in a case where it is determined that the speed of the body 120 is greater than that of the second mobile body 110 ("no" in step S63), there is a low risk of the second mobile body 110 colliding from behind with body 120 having entered the same vehicle lane, and therefore the behavior estimation unit 40 estimates that the second mobile body 110 will maintain the speed thereof (step S65).

In a case where the behavior estimation unit 40 has estimated in step S64 that the second mobile body 110 will decelerate, there is a risk of the first mobile body 100 colliding from behind with the second mobile body 110 having decelerated, and therefore the generation unit 50 generates control information that causes the first mobile body 100 to decelerate. The output unit 60 then outputs the control information, and consequently the first mobile body 100 decelerates (step S66). It should be noted that the generation unit 50 may determine whether or not the distance from the first mobile body 100 to the second mobile body 110 is equal to or greater than a predetermined distance. For example, in a case where the distance from the first mobile body 100 to the second mobile body 110 is equal to or greater than the predetermined distance, the first mobile body 100 and the second mobile body 110 are sufficiently separated, and therefore the first mobile 100 body does not have to decelerate in step S66.

In a case where the behavior estimation unit 40 has estimated in step S65 that the second mobile body 110 will maintain the speed thereof, the first mobile body 100 is able to travel following the second mobile body 110, and therefore the first mobile body 100 maintains the speed thereof (step S67).

In this way, in application example 3, the second mobile body 110 travels on a travel path that is adjacent to the road on which the body 120 is present, and the behavior estimation unit 40 estimates the behavior of the second mobile body 110 additionally based on a relationship (the speed difference, for example) between the body 120 and the second mobile body 110.

### [3-4. Application Example 4]

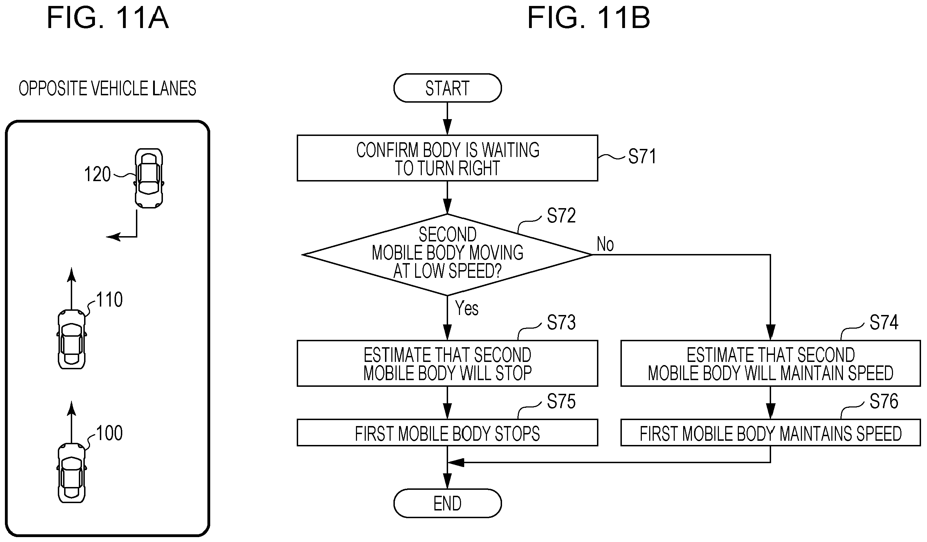

Figs. 11A and 11B are a drawing and a flowchart depicting an example of an operation of the information processing device 10 when the second mobile body 110 and the body 120 are present in opposite vehicle lanes. It should be noted that, in application example 4, the first mobile body 100 is present in the same vehicle lane as the vehicle lane in which the second mobile body 110 is present.

First, the body detection unit 31 confirms that the body 120 is waiting to turn right, as the specific state (step S71). For example, the body detection unit 31 confirms that the body 120 is waiting to turn right, by detecting a direction indicator of the body 120 being turned on or the direction of the vehicle body.

Next, the behavior estimation unit 40 determines whether or not the second mobile body 110 is moving at a low speed (step S72). The behavior estimation unit 40 carries out this determination on the basis of the speed of the second mobile body 110 detected by the mobile body detection unit 32, for example. At such time, the behavior estimation unit 40 may determine whether or not the travel path of the second mobile body 110 is congested. Hereinafter, a description will be given in which, in a case where the second mobile body 110 is moving at a low speed, it is assumed that the cause for moving at a low speed is that the travel path of the second mobile body 110 is congested.

In a case where it is determined that the second mobile body 110 is moving at a low speed ("yes" in step S72), the travel path of the second mobile body 110 is congested and no problem will occur if the second mobile body 110 stops for a little while to allow the body 120 to turn right, and therefore the behavior estimation unit 40 estimates that the second mobile body 110 will stop to give way to the body 120 (step S73).

However, in a case where it is determined that the second mobile body 110 is not moving at a low speed ("no" in step S72), the body 120 will continue to wait to turn right, and therefore the behavior estimation unit 40 estimates that the second mobile body 110 will maintain the speed thereof (step S74).

In a case where the behavior estimation unit 40 has estimated in step S73 that the second mobile body 110 will stop, there is a risk of the first mobile body 100 colliding from behind with the second mobile body 110 having stopped, and therefore the generation unit 50 generates control information that causes the first mobile body 100 to stop. The output unit 60 then outputs the control information, and consequently the first mobile body 100 stops (step S75).

In a case where the behavior estimation unit 40 has estimated in step S74 that the second mobile body 110 will maintain the speed thereof, the first mobile body 100 is able to travel following the second mobile body 110, and therefore the first mobile body 100 maintains the speed thereof (step S76).

In this way, in application example 4, the second mobile body 110 travels on a travel path that is opposite to the road on which the body 120 is present, and the behavior estimation unit 40 estimates the behavior of the second mobile body 110 additionally based on a state of the second mobile body 110 (the speed of the second mobile body 110, for example).

It should be noted that, in a case where the travel path of the second mobile body 110 is not congested, even when the second mobile body 110 is moving at a low speed, in step S73 the behavior estimation unit 40 may not estimate that the second mobile body 110 will stop and may estimate that the second mobile body 110 will maintain the speed thereof, since there is a possibility of the second mobile body 110 temporarily moving at a low speed and then quickly accelerating, for example.

### [3-5. Application Example 5]

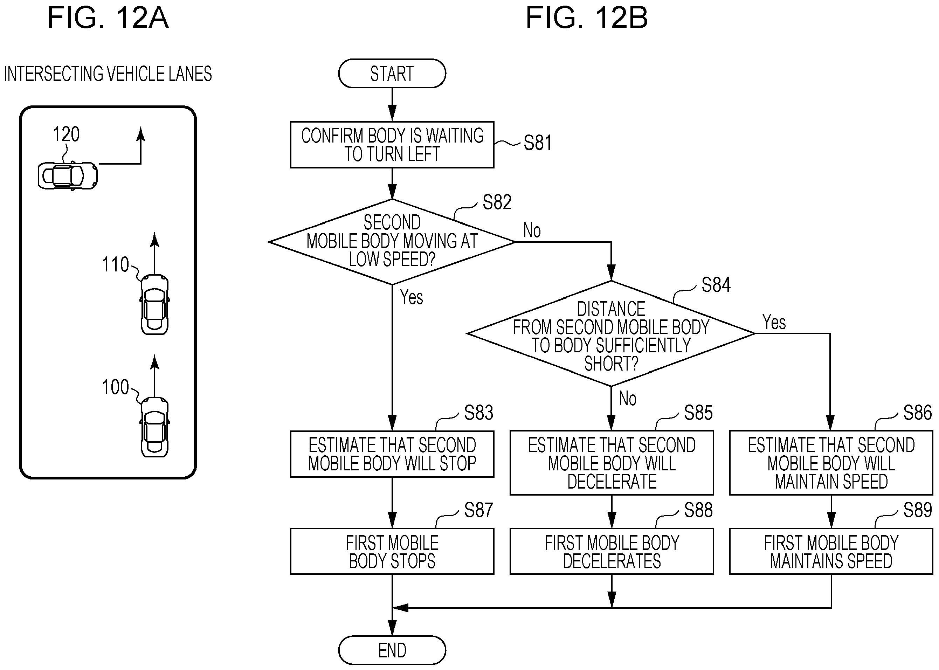

Figs. 12A and 12B are a drawing and a flowchart depicting an example of an operation of the information processing device 10 when the second mobile body 110 and the body 120 are present in intersecting vehicle lanes. It should be noted that, in application example 5, the first mobile body 100 is present in the same vehicle lane as the vehicle lane in which the second mobile body 110 is present. It should be noted that application example 5 may be a situation in which the body 120 is exiting from a parking lot or the like.

First, the body detection unit 31 confirms that the body 120 is waiting to turn left, as the specific state (step S81). For example, the body detection unit 31 confirms that the body 120 is waiting to turn left, by detecting a direction indicator of the body 120 being turned on or the direction of the vehicle body.

Next, the behavior estimation unit 40 determines whether or not the second mobile body 110 is moving at a low speed (step S82). The behavior estimation unit 40 carries out this determination on the basis of the speed of the second mobile body 110 detected by the mobile body detection unit 32, for example. At such time, the behavior estimation unit 40 may determine whether or not the travel path of the second mobile body 110 is congested. Hereinafter, a description will be given in which, in a case where the second mobile body 110 is moving at a low speed, it is assumed that the cause for moving at a low speed is that the travel path of the second mobile body 110 is congested.

In a case where it is determined that the second mobile body 110 is moving at a low speed ("yes" in step S82), the travel path of the second mobile body 110 is congested and no problem will occur if the second mobile body 110 stops for a little while to allow the body 120 to turn left, and therefore the behavior estimation unit 40 estimates that the second mobile body 110 will stop to give way to the body 120 (step S83).

However, in a case where it is determined that the second mobile body 110 is not moving at a low speed ("no" in step S82), the behavior estimation unit 40 determines whether or not the distance from the second mobile body 110 to the body 120 is sufficiently short (step S84). The behavior estimation unit 40 carries out this determination on the basis of the position of the body 120 detected by the body detection unit 31 and the position of the second mobile body 110 detected by the mobile body detection unit 32, for example. It should be noted that sufficiently short means a proximity of an extent with which the body 120 is not able to enter the travel path on which the second mobile body 110 is traveling due to the second mobile body 110, for example.

In a case where it is determined that the distance from the second mobile body 110 to the body 120 is not sufficiently short ("no" in step S84), there is space in front of the second mobile body 110 and there is a possibility that the body 120 will turn left, and therefore the behavior estimation unit 40 estimates that the second mobile body 110 will decelerate (step S85).

However, in a case where it is determined that the distance from the second mobile body 110 to the body 120 is sufficiently short ("yes" in step S84), there is no space in front of the second mobile body 110 and there is a low possibility that the body 120 will turn left, and therefore the behavior estimation unit 40 estimates that the second mobile body 110 will maintain the speed thereof (step S86).

In a case where the behavior estimation unit 40 has estimated in step S83 that the second mobile body 110 will stop, there is a risk of the first mobile body 100 colliding from behind with the second mobile body 110 having stopped, and therefore the generation unit 50 generates control information that causes the first mobile body 100 to stop. The output unit 60 then outputs the control information, and consequently the first mobile body 100 stops (step S87).

In a case where the behavior estimation unit 40 has estimated in step S85 that the second mobile body 110 will decelerate, there is a risk of the first mobile body 100 colliding from behind with the second mobile body 110 having decelerated, and therefore the generation unit 50 generates control information that causes the first mobile body 100 to decelerate. The output unit 60 then outputs the control information, and consequently the first mobile body 100 decelerates (step S88).

In a case where the behavior estimation unit 40 has estimated in step S86 that the second mobile body 110 will maintain the speed thereof, the first mobile body 100 is able to travel following the second mobile body 110, and therefore the first mobile body 100 maintains the speed thereof (step S89).

In this way, in application example 5, the second mobile body 110 travels on a travel path that intersects the road on which the body 120 is present, and the behavior estimation unit 40 estimates the behavior of the second mobile body 110 additionally based on a state of the second mobile body 110 (the speed of the second mobile body 110, for example). Furthermore, the behavior estimation unit 40 estimates the behavior of the second mobile body 110 additionally based a relationship between the body 120 and the second mobile body 110 (the positional relationship, for example).

### [4. Effects Etc.]

As described above, there are cases where the course of the second mobile body 110 that is present in the periphery of the first mobile body 100 is affected due to the body 120 that is present in the periphery of the first mobile body 100 being in a specific state, for example. For example, there is a risk of the first mobile body 100 entering a hazardous situation due to the behavior of the second mobile body 110 changing based on the specific state of the body 120. Thus, by estimating the behavior of the second mobile body 110 on the basis of the specific state of the body 120, specifically what kind of behavior will be adopted by the second mobile body 110 is known, and therefore a hazard caused by a peripheral mobile body (the second mobile body 110) can be predicted more precisely. As a result, the first mobile body 100 is able to implement control in order to avoid the hazard caused by the behavior of the second mobile body 110, and is able to notify the behavior of the second mobile body 110 to other mobile bodies that are present in the periphery of the first mobile body 100.

Furthermore, even in a case where the body 120 has entered the specific state, the estimation result for the behavior of the second mobile body 110 may change depending on the state of the second mobile body 110, a relationship (positional relationship, speed, direction, or the like) between the body 120 and the second mobile body 110, the road situation in the periphery of the body 120, the road situation in the periphery of the second mobile body 110, or the like. Consequently, the behavior of the second mobile body 110 can be estimated more precisely by estimating the behavior on the basis of also the aforementioned states, relationships, situations, or the like in addition to the specific state of the body 120.

Furthermore, the type of movement control implemented by the first mobile body 100 using the estimation result for the behavior of the second mobile body 110 may change depending on a relationship (positional relationship, speed, direction, or the like) between the first mobile body 100 and the second mobile body 110. Consequently, more precise control information can be generated based on also a relationship between the first mobile body 100 and the second mobile body 110.

### (Other Embodiments)

Hereinabove, the information processing device 10 of the present disclosure has been described based on the aforementioned embodiment; however, the present disclosure is not restricted to the aforementioned embodiment. Modes in which various modifications conceived by a person skilled in the art have been implemented in the present embodiment, and modes constructed by combining the constituent elements in different embodiments are also included within the scope of the present disclosure provided they do not depart from the purpose of the present disclosure.

For example, the body 120 was a vehicle in the aforementioned embodiment; however, the body 120 may be a person, an animal, a traffic signal, or the like. In a case where the body 120 is a person or an animal, the specific state of the body 120 may include a state in which the person or the animal is attempting to enter a roadway, or a state in which the person or the animal is present in a roadway. Furthermore, in a case where the body 120 is a person, the specific state of the body 120 may include, for example, a state in which the person is walking while looking at a mobile terminal such as a smartphone, what is referred to as texting while walking, and a state in which the person is attempting to cross a pedestrian crossing even though a traffic signal is red or the like. Furthermore, in a case where the body 120 is a traffic signal, the specific state of the body 120 may include a state in which the traffic signal instructs stopping or turning right or left. Furthermore, in a case where the body 120 is a bicycle from among vehicles, the specific state of the body 120 may include a state in which the bicycle is present in a roadway rather than in the vicinity of the shoulder of the road. It should be noted that these states can also be detected by means of the logical or statistical analysis of images and radar information or the like, or machine learning or the like.

Furthermore, for example, in the aforementioned embodiment, the behavior estimation unit 40 estimated the behavior of the second mobile body 110 additionally based on the speed of the second mobile body 110 as the state of the second mobile body 110; however, there is not restriction thereto. For example, the state of the second mobile body 110 may include the acceleration or deceleration and the roll or yaw state of the second mobile body 110. This is because the estimate result for the behavior of the second mobile body 110 may change also depending on these states.

Furthermore, an example in which there was a single second mobile body 110 was described in the aforementioned embodiment; however, there may be a plurality of second mobile bodies 110. Specifically, the behavior estimation unit 40 estimates each of the behaviors of the plurality of second mobile bodies 110 in such a way that the behaviors are coordinated. The generation unit 50 generates control information or provided information on the basis of each of the behaviors of the plurality of second mobile bodies 110 estimated.

Here, in a case where there are a plurality of second mobile bodies 110 the courses of which are affected by the body 120, if the behaviors of the second mobile bodies 110 are estimated individually, there is a risk of the behaviors of the second mobile bodies 110 interfering with each other. As a result, the actual behaviors of each of the second mobile bodies 110 and the estimation results may be different, and it may become difficult for the first mobile body 100 to be operated appropriately.

However, according to the present configuration, each of the behaviors of the plurality of second mobile bodies 110 is estimated in such a way that the behaviors are coordinated, and it is thereby possible to suppress each of the estimated behaviors interfering with each other. Consequently, the first mobile body 100 can be operated more appropriately, and it becomes possible to improve safety.

Furthermore, an example in which the generation unit 50 generates control information for the first mobile body 100 was described in the aforementioned embodiment; however, the generation unit 50 may generate input information for processing in which a route plan for the first mobile body 100 is decided based on a body that is present within a predetermined range from the first mobile body 100. Specifically, the detection unit 30 detects a body that is present within the predetermined range from the first mobile body 100. In a case where a detected body is not a mobile body, the generation unit 50 generates position information that indicates the position at the point in time at which the body was detected. In a case where a detected body is a mobile body, the generation unit 50 generates position information that indicates the position at the point in time at which the body was detected and the position of the body after a predetermined time has elapsed, estimated from the present movement speed of the body or the like. In addition, in a case where the body is the second mobile body 110, the generation unit 50 generates position information that indicates a position calculated from an estimated behavior. These items of position information become input for route plan processing. The route plan processing may be processing in which the potential method is used, for example. The first mobile body 100 then travels according to a route plan that has been output by the route plan processing.

It thereby becomes easy to control, in real time, the movement control for the first mobile body 100 in accordance with the behavior of the second mobile body 110. Furthermore, even if there are a plurality of second mobile bodies 110, coordination between each of the behaviors of the plurality of second mobile bodies 110 can be ensured more easily.

Furthermore, the present disclosure can be realized not only as the information processing device 10 but also as a method that includes steps (processing) carried out by the constituent elements that constitute the information processing device 10.

For example, those steps may be executed by a computer (computer system). Also, the present disclosure can be realized as a program for causing a computer to execute those steps included in the method. In addition, the present disclosure can be realized as a non-transitory computer-readable recording medium that is a CD-ROM or the like having that program recorded thereon.

Specifically, the program is a program that controls an operation of the information processing device 10 mounted on the first mobile body 100. The program includes: an acquisition step in which sensing information obtained by performing sensing in a periphery of the first mobile body 100 is acquired; a body detection step in which the body 120 that is present in the periphery of the first mobile body 100 and is in a specific state is detected using the sensing information; and a mobile body detection step in which the second mobile body 110 that is present in the periphery of the first mobile body 100 and the course of which is affected by the detected body 120 is detected using the sensing information. Furthermore, the program includes: a behavior estimation step in which a behavior of the detected second mobile body 110 is estimated based on the specific state; a generation step in which at least one item of output information is generated from among information that is used for movement control of the first mobile body 100, and information that is provided to mobile bodies present in the periphery of the first mobile body 100, based on the estimated behavior; and an output step in which the at least one item of output information is output.

For example, in a case where the present disclosure is realized as a program (software), each step is executed by the program being executed using hardware resources such as a CPU, a memory, input/output circuits, and so forth of a computer. That is, each step is executed by the CPU acquiring data from the memory, input/output circuit, or the like to perform computations, and outputting computation results to the memory, input/output circuit, or the like.

Furthermore, the plurality of constituent elements included in the information processing device 10 of the aforementioned embodiment may each be realized as a dedicated or general-purpose circuit. These constituent elements may be realized as one circuit or may be realized as a plurality of circuits.

Furthermore, the plurality of constituent elements included in the information processing device 10 of the aforementioned embodiment may be realized as a large-scale integration (LSI), which is an integrated circuit (IC). These constituent elements may be implemented separately as single chips or may be implemented as a single chip in such a way as to include some or all thereof. An LSI may also be referred to as a system LSI, a super LSI, or an ultra LSI depending on the difference in the degree of integration.

Furthermore, an integrated circuit is not restricted to an LSI and may be realized by means of a dedicated circuit or a general-purpose processor. An FPGA (field-programmable gate array) that can be programmed or a reconfigurable processor, with which the connections and settings of circuit cells within the LSI can be reconfigured, may be used.

Other modes obtained by carrying out various modifications conceived by a person skilled in the art with respect to the embodiment, and modes realized by arbitrarily combining constituent elements and functions in the embodiment without departing from the purpose of the present disclosure are also included in the present disclosure.

## Claims

1. An information processing device mounted on a first mobile body, comprising:
a processor; and
a memory storing thereon a computer program, which when executed by the processor, causes the processor to perform operations including:
acquiring sensing information obtained by performing sensing in a periphery of the first mobile body;
detecting, using the sensing information, a body that (i) is present in the periphery of the first mobile body and (ii) is in a specific state;
detecting, using the sensing information, a second mobile body that is present in (i) the periphery of the first mobile body and (ii) the course of which is affected by the detected body;
estimating a behavior of the detected second mobile body using the specific state;
generating, using the estimated behavior, at least one item of output information from among (i) information that is used for movement control of the first mobile body, and (ii) information that is provided to a mobile body present in the periphery of the first mobile body; and
outputting the at least one item of output information.

2. The information processing device according to Claim 1,
wherein the body includes a vehicle, and
the specific state includes a state in which an intention is displayed by a lamp mounted on the vehicle being turned on, or a cutting in, meandering, or wandering state as a traveling state.

3. The information processing device according to Claim 1,
wherein the body includes a person or an animal, and
the specific state includes a state in which the person or the animal is present in a roadway.

4. The information processing device according to Claim 1,
wherein the body includes a traffic signal, and
the specific state includes a state in which the traffic signal instructs stopping or turning right or left.

5. The information processing device according to Claim 4,
wherein the second mobile body travels on a travel path that is the same as, adjacent to, or intersecting a road on which the body is present.

6. The information processing device according to Claim 5,
wherein, in the estimating, the behavior is estimated additionally based on a state of the second mobile body.

7. The information processing device according to Claim 6,
wherein, in the estimating, the behavior is estimated additionally based on a relationship between the body and the second mobile body.

8. The information processing device according to Claim 1,
wherein the output information is generated additionally based on a relationship between the first mobile body and the second mobile body.

9. The information processing device according to Claim 7,
wherein the relationship includes a positional relationship.

10. The information processing device according to Claim 7,
wherein the relationship includes a relationship regarding at least one of speed and direction.

11. The information processing device according to Claim 1,
wherein, in the estimating, the behavior is estimated additionally based on a road situation in a periphery of the body.

12. The information processing device according to Claim 1,
wherein, in the estimating, the behavior is estimated additionally based on a road situation in a periphery of the second mobile body.

13. The information processing device according to Claim 1,
wherein, in the estimating, in a case where the second mobile body is present in plurality, behaviors of the plurality of second mobile bodies are estimated so as to be coordinated, and,
in the generating, the at least one item of output information is generated based on the behaviors of the plurality of second mobile bodies.

14. The information processing device according to Claim 1,
wherein the information that is used for the movement control of the first mobile body includes control information for controlling at least one of acceleration, deceleration, and steering of the first mobile body.

15. The information processing device according to Claim 1,
wherein the information that is used for the movement control of the first mobile body includes input information for processing in which a route plan for the first mobile body is decided based on a body that is present within a predetermined range from the first mobile body.

16. A non-transitory recording medium storing thereon a computer program for controlling an information processing apparatus that is mounted on a first mobile body, which when executed by a processor, causes the processor to perform operations including:
acquiring sensing information obtained by performing sensing in a periphery of the first mobile body;
detecting, using the sensing information, a body that (i) is present in the periphery of the first mobile body and (ii) is in a specific state;
detecting, using the sensing information, a second mobile body that is present in (i) the periphery of the first mobile body and (ii) the course of which is affected by the detected body;
estimating a behavior of the detected second mobile body using the specific state;
generating, using the estimated behavior, at least one item of output information from among (i) information that is used for movement control of the first mobile body, and (ii) information that is provided to a mobile body present in the periphery of the first mobile body; and
outputting the at least one item of output information.
